# EUROPÄISCHE PATENTSCHRIFT

(11) **EP 2 000 659 B1**
(45) Veröffentlichungstag und Bekanntmachung des Hinweises auf die Patenterteilung: **13.03.2013**
(21) Anmeldenummer: 08104049.5
(22) Anmeldetag: 21.05.2008
(51) Int. Cl.: F02M 35/10, B29C 65/00, B29C 65/06, B29K 101/12

(54) **Ansaugsystem**
Intake system
Système d'aspiration

(30) Priorität: 06.06.2007 DE 102007026826
(43) Veröffentlichungstag der Anmeldung: 10.12.2008
(73) Patentinhaber: MANN+HUMMEL GmbH, 71638 Ludwigsburg (DE)
(72) Erfinder: Dirnberger, Timo, 71672 Marbach (DE); Klatt, Peter, 71723 Großbottwar (DE); Klotz, Bernhard, 71364 Winnenden (DE)
(74) Vertreter: Seyboth, Matthias

(56) Entgegenhaltungen:
- WO-A1-98/59166
- WO-A2-2006/046102
- DE-A1-102004 015 881
- DE-A1-102004 015 926
- GB-A- 2 279 035
- US-A- 5 947 073
- ANONYMUS: "Verbindungstechniken - Kategorie II, Schweißen, Kleben"[Online] 22. Oktober 2006 (2006-10-22), Seiten 91-144, XP002611848 DuPont Technische Kunststoffe Allgemeine Konstruktionsprinzipien Gefunden im Internet: URL:http://plastics.dupont.com/plastics/pd flit/europe/design/L12565d_10.pdf> [gefunden am 2010-11-25] & anonymous:[Online] 22. Oktober 2006 (2006-10-22), Seiten 91-144, Gefunden im Internet: URL:http://web.archive.org/web/20061022035 451/http://www.plastics.dupont.com/plastic s/pdflit/europe/design/L12565d_10.pdf> [gefunden am 2010-11-25]

## Beschreibung

### Technisches Gebiet

Die Erfindung betrifft ein Ansaugsystem einer Brennkraftmaschine nach dem Oberbegriff des unabhängigen Anspruches 1.

### Stand der Technik

Aus der EP 1 325 223 A1 ist ein Ansaugsystem mit einem Ansaugrohr für eine Brennkraftmaschine bekannt. Dieses weist zwei Teile auf, die miteinander durch Reibschweißen verbunden sind. Das Reibschweißprofil beider Teile besteht aus jeweils einer inneren umlaufenden Fläche sowie aus zwei äußeren umlaufenden Flächen. Während die inneren Flächen miteinander verbunden werden, sind die äußeren Flächen zur Abstützung vorgesehen.
Die DE 10 2004 015 881 A1 offenbart einen Einlassverteiler aus Kunststoff, der aus mehreren miteinander verschweißten Einzelteilen besteht. In der WO 2006/046102 A2 wird eine Schweißstruktur für ein Kunststoffsaugrohr beschrieben, bei der die Schweißnähte am Bauteil von außen sichtbar sind.
Die DE 10 2004 015 926 A1 zeigt ebenfalls einen bekannten Einlassverteiler mit sichtbaren Schweißrändern.
Aus der Fachliteratur, wie etwa in der im Internet zugänglichen Veröffentlichung "DuPont - Technische Kunststoffe, Allgemeine Konstruktionsprinzipien" (URL: http://plastics.dupont.com/plastics/pdflit/europe/design/L125 65d_10.pdf), sind verschiedene Verbindungstechniken bekannt. In der Abbildung 10.78 "Schweißnahtprofile" sind mögliche Anordnungen eines "Gratspeichers" entlang der Schweißflächen offenbart.

Es ist ferner aus der DE 198 42 889 ein Filtersystem, insbesondere ein Flüssigkeitsfilter, bekannt, bei dem zwei Kunststoffteile miteinander verschweißt werden. Zwischen diesen beiden Kunststoffteilen befindet sich ein Filtermedium. Auch hier ist ein Kunststoffteil mit einem umlaufenden Rand zur Verschweißung mit dem weiteren Kunststoffteil vorgesehen. Der Rand wird durch einen äußeren, umlaufenden Kragen abgeschirmt. Ein Nachteil bei diesem Aufbau besteht darin, dass eine definierte Abstützung nicht erfolgt. Außerdem ist der optische Eindruck bei einem solchen Kragen uneinheitlich. Insbesondere durch unterschiedliche Schweißdrücke und unterschiedliches Aufschmelzen der beiden miteinander zu verschweißenden Kunststoffflächen kann der Kragen in das Gegenstück eindringen und auch hier für eine weitere Verschweißung sorgen oder einen großen Abstand zu dem Gegenstück aufweisen, was sich in einer unregelmäßigen Optik bemerkbar macht.

Der Erfindung liegt die Aufgabe zugrunde, die Nachteile zu vermeiden und ein Ansaugsystem zu schaffen, welches einerseits eine zuverlässige, definierte Verbindung mehrerer Teile zueinander aufweist und andererseits optisch ansprechend gestaltet ist.

### Offenbarung der Erfindung

Diese Aufgabe wird ausgehend von dem Oberbegriff des unabhängigen Anspruches 1 durch dessen kennzeichnende Merkmale gelöst.

Der wesentliche Vorteil der Erfindung liegt darin, dass die Schweißnaht, die beide Teile miteinander verbindet, von außen nicht sichtbar ist, da ein Abschirmrand vorgesehen ist, der sich über die Schweißnaht erstreckt, und einen einheitlichen optischen Eindruck erzeugt.

Gemäß einer weiteren Ausgestaltung der Erfindung bezieht sich das zweite Teil auf einen sich über den Abschirmrand erstreckenden Abdeckrand.

Weiterbildungsgemäß können der Fangrand bzw. die Kontaktflächen im Bereich des Fangrandes Unterbrechungen aufweisen.

Ein Verfahren zur Herstellung eines Ansaugsystems nach Anspruch 1 sieht vor, zwei Teile aus thermoplastischem Kunststoff zu bilden, die miteinander verschweißt werden, wobei zunächst das erste Teil in einer Halteform fixiert und das zweite Teil auf das erste Teil aufgelegt und durch Schwingungen angeregt wird, um eine Verschweißung zu erzielen. Zur Stabilisierung des ersten Teils sind im Schweißwerkzeug Schieber angeordnet, die dieses erste Teil von außen halten.

### Kurze Beschreibung der Zeichnungen

Die Erfindung wird nachfolgend anhand eines Ausführungsbeispiels näher erläutert. Es zeigt:
- Figur 1: den Stand der Technik beim Verschweißen von zwei thermoplastischen Kunststoffteilen und
- Figur 2: die Schnittdarstellung eines Details eines Ansaugsystems und
- Figur 3: die Darstellung gemäß Figur 2 mit dem Ansaugsystem in einer Schweißvorrichtung.

### Ausführungsform(en) der Erfindung

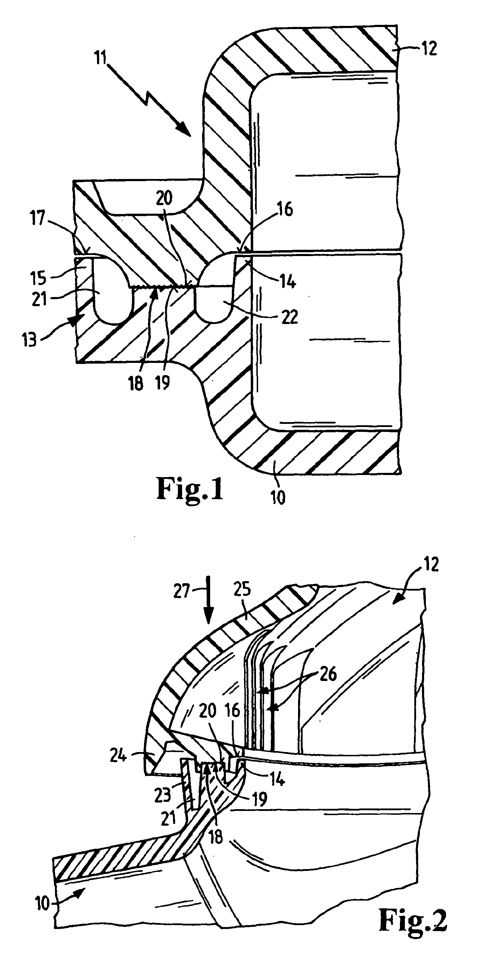

Figur 1 zeigt die Detailansicht einer Unterschale 10 und einer Oberschale 12 eines hier schematisch dargestellten Ansaugsystems 11. Die beiden Teile werden im Schweißbereich 13 durch Reibschweißen miteinander verbunden. Bei der Unterschale 10 und der Oberschale 12 handelt es sich um thermoplastische Kunststoffteile, die im Spritzgießverfahren hergestellt wurden. Die Unterschale 10 weist zwei umlaufende Fangränder 14, 15 auf, die sich auf Anlageflächen 16, 17 der Oberschale 12 abstützen. Zwischen den beiden Fangrändern 14, 15 befindet sich die umlaufende Schweißnaht, an welcher die Kontaktfläche 19 mit der Kontaktfläche 20 miteinander verschweißt werden. Die Maßbasis für die Schweißtiefe bildet der Fangrand 14 mit der Anlagefläche 16, d. h. dass der Schweißvorgang so lange fortgesetzt wird, bis zwischen Fangrand 14 und Anlagefläche 16 ein geringer definierter Abstand eingestellt ist. Ein evtl. vorhandener Schweißaustrieb wird in den beiden Aufnahmerinnen 21, 22 gesammelt und ist von außen nicht sichtbar. Allerdings sind von außen die Anlagefläche 17 und der Fangrand 15 zu sehen. Evtl. Unregelmäßigkeiten in der Höhe machen sich hier optisch bemerkbar.

Figur 2 zeigt einen Aufbau, bei dem ebenfalls eine Oberschale 12 mit einer Unterschale 10 verschweißt wird. Gleiche Teile sind mit gleichen Bezugszeichen versehen. Die Verschweißung erfolgt auch hier an der Schweißnaht 18 zwischen den Kontaktflächen 19 und 20. Der Fangrand 14 kommt bei Beendigung des Schweißvorgangs an der Anlagefläche 16 nicht in Kontakt, definiert jedoch über einen bestimmten Abstand die Schweißtiefe. Ein Fangrand nach außen ist hier nicht vorgesehen, sondern lediglich ein umlaufender Steg 23, der die Aufnahmerinne 21 für den Schweißaustrieb abschirmt. Umlaufend an der Oberschale 12 ist jedoch ein Abschirmrand 24 vorgesehen, der sich über den Steg 23 erstreckt und damit ein einheitliches äußeres Erscheinungsbild erzeugt. Der Abschirmrand 24 überdeckt den Steg 23 mit einer Länge von 5 bis 8 mm und bietet nicht nur ein optisch ansprechendes Aussehen, sondern gleichzeitig ein Abschirmen der Schweißnaht gegen Verschmutzung oder sonstige Umwelteinflüssen.

Der Abschirmrand 24 geht nahtlos in die Gehäuseform 25 über. Diese weist im Inneren Rippen 26 auf, die sich von der Gehäuseform aus bis hin zur Anlagefläche 16 erstrecken. Beim Reibschweißen wird über das Schweißwerkzeug eine Schweißkraft gemäß den Pfeilen 27 auf das Gehäuse ausgeübt. Diese Schweißkraft 27 wird über die Rippen 26 unmittelbar auf die Anlagefläche 16 übertragen.

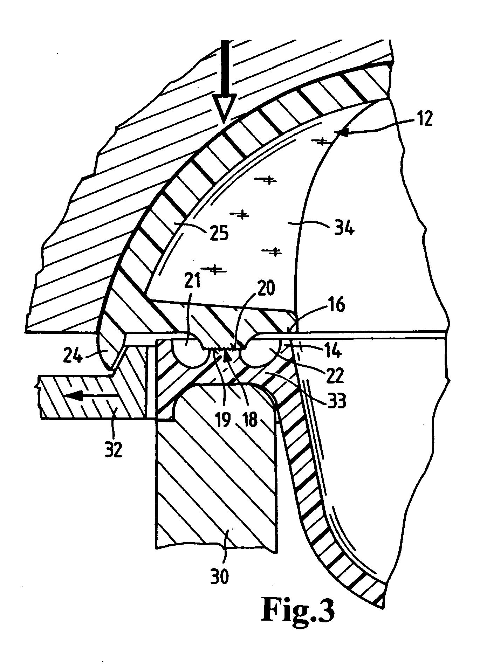

Figur 3 zeigt im Detail ein Ansaugsystem, das sich in einem Schweißwerkzeug befindet. Es ist das Schweißwerkzeugunterteil 30 dargestellt, das an der Unterschale 10 anliegt. Die Unterschale weicht geringfügig von der in Figur 2 gezeigten Unterschale ab. Es ist jedoch ersichtlich, dass grundsätzlich im Bereich der Verschweißung das Schweißwerkzeug die Unterschale unterstützt.

Die Oberschale 12 wird durch ein Schweißwerkzeugoberteil 31 umfasst. Das Schweißwerkzeugoberteil 31 erzeugt eine gemäß Pfeil 27 gerichtete Kraft auf die Verschweißung. Gleichzeitig wird das Oberteil 31 mit einer quer zur Schweißrichtung verlaufenden Bewegung zur Erwärmung der beiden Kontaktflächen beaufschlagt. Am Abschirmrand 24 wird zusätzlich zur Fixierung der Oberschale 12 ein Stegprofil 32 verwendet, das unter den Abschirmrand hindurchgreift. Zur Übertragung der Schweißkraft von dem Schweißwerkzeugoberteil 31 zur Verschweißungsposition sind Rippen 34 vorgesehen, die in Abständen voneinander über der Schweißnaht vorgesehen sind.

## Patentansprüche

1. Ansaugsystem einer Brennkraftmaschine mit einer Luftzufuhröffnung, wenigstens einer Öffnung zur Abgabe der Luft an eine Brennkraftmaschine, wobei dieses aus einem thermoplastischen Kunststoff besteht und wenigstens zweiteilig aufgebaut ist und wobei die beiden Teile (10, 12) durch Reibschweißen miteinander verbunden sind, **dadurch gekennzeichnet, dass** zur Bildung der Schweißnaht (18) auf beiden Teilen (10, 12) jeweils umlaufende Kontaktflächen (19, 20) vorgesehen sind und auf einem ersten Teil (10) - parallel zur Schweißnaht (18) verlaufend - ein Fangrand (14) und an dem zweiten Teil (12) - ebenfalls parallel zur Schweißnaht (18) verlaufend - ein Abschirmrand (24) vorgesehen sind, der sich über die Schweißnaht (18) und über einen Steg (23) erstreckt, wobei das zweite Teil (12) eine Kontaktfläche (20) im Bereich des Fangrandes (14) aufweist, wobei die Schweißnaht von außen nicht sichtbar ist.

2. Ansaugsystem nach Anspruch 1, **dadurch gekennzeichnet, dass** Fangrand (14 ) und/oder Kontaktfläche (19) für den Fangrand (14) Unterbrechungen aufweisen.

3. Ansaugsystem nach einem der vorherigen Ansprüche, **dadurch gekennzeichnet, dass** der Abschirmrand (24) in eine Gehäusestruktur übergeht und zwischen Gehäusestruktur und der umlaufenden Kontaktfläche (20) der Schweißnaht Rippen (34) angeordnet sind, welche eine Übertragung der Schweißkraft von der Gehäusestruktur auf die Schweißnaht (18) bewirken.

4. Verfahren zum Herstellen eines Ansaugsystems nach Anspruch 1, bei dem ein erstes und ein zweites aus thermoplastischem Kunststoff bestehendes Teil (10, 12) miteinander verschweißt werden, wobei zunächst das erste Teil (10) in einer Halteform fixiert wird und das zweite Teil (12) auf das erste Teil (10) aufgelegt und durch Schwingungen angeregt wird, um eine Verschweißung zu erzielen, wobei das erste Teil (10) mittels Schieber im Schweißwerkzeug von außen gehalten wird.

## Claims

1. Intake system of an internal combustion engine with an air inlet opening, at least one opening for transferring the air to an internal combustion engine, this system consisting of thermoplastics and being constructed at least in two parts, and the two parts (10, 12) being connected with each other by friction welding, **characterized in that** for forming the weld seam (18) on both parts (10, 12) circumferential contact surfaces (19, 20) each are provided and that on a first part (10) - extending parallel to the weld seam (18) - a stopping edge (14) and on the second part (12) - also extending parallel to the weld seam (18) - a protective edge (24) is provided which extends across the weld seam (18) and across a rib (23), the second part (12) featuring a contact surface (20) in the area of the stopping edge (14), the weld seam being not visible from the outside.

2. Intake system according to claim 1, **characterized in that** the stopping edge (14) and/or the contact surface (19) for the stopping edge (14) feature discontinuities.

3. Intake system according to one of the above claims, **characterized in that** the protective edge (24) merges into a housing structure and that between housing structure and the circumferential contact surface (20) of the weld seam ribs (34) are disposed which cause a transfer of the welding force from the housing structure to the weld seam (18).

4. Method for manufacturing an intake system according to claim 1, during which a first and a second part (10, 12) consisting of thermoplastics are welded with each other, the first part (10) being at first fixed in a supporting form and the second part (12) being placed on top of the first part (10) and excited by vibrations to obtain a welding, the first part (10) being held from the outside by means of sliders in the welding tool.

## Revendications

1. Système d'aspiration d'un moteur à combustion interne avec une ouverture d'admission d'air, au moins une ouverture de transfert de l'air à un moteur à combustion interne, ce système étant constitué d'une matière thermoplastique et composé d'au moins deux parties et les deux parties (10, 12) étant assemblées l'une à l'autre par soudage par friction, **caractérisé en ce que** des surfaces de contact (19, 20) respectivement circulaires sont prévues sur les deux parties (10, 12) pour former le cordon de soudure (18) et que sont prévus sur la première partie (10) - évoluant de manière parallèle au cordon de soudure (18) - une bordure d'arrêt (14) et sur la deuxième partie (12) - évoluant aussi de manière parallèle au cordon de soudure (18) - une bordure de protection (24) qui s'étend au-dessus du cordon de soudure (18) et au-dessus d'une nervure (23), la deuxième partie (12) présentant une surface de contact (20) à proximité de la bordure d'arrêt (14), le cordon de soudure n'étant pas visible de l'extérieur.

2. Système d'aspiration selon la revendication 1, **caractérisé en ce que** la bordure d'arrêt (14) et/ou la surface de contact (19) pour la bordure d'arrêt (14) sont discontinues.

3. Système d'aspiration selon l'une des revendications précédentes, **caractérisé en ce que** la bordure de protection (24) passe dans une structure de boîtier et que des nervures (34) sont disposées entre la structure de boîtier et la surface de contact (20) circulaire du cordon de soudure, ces nervures ayant pour effet de transférer la charge de soudure de la structure de boîtier au cordon de soudure (18).

4. Procédé de fabrication d'un système d'aspiration selon la revendication 1, selon lequel une première partie et une deuxième partie en matière thermoplastique (10, 12) sont soudées l'une à l'autre, la première partie (10) étant, dans un premier temps, fixée dans une forme de retenue et la deuxième partie (12) posée sur la première partie (10) et excitée sous l'effet de vibrations afin de réaliser un soudage, la première partie (10) étant retenue de l'extérieur dans l'outil de soudure au moyen de coulisseaux.
